# NOUVEAU FASCICULE DE BREVET EUROPEEN

(11) **EP 3 328 184 B2**
(45) Date de publication et mention de la décision concernant l'opposition: **12.07.2023**
(45) Mention de la délivrance du brevet: 06.11.2019
(21) Numéro de dépôt: 16745780.3
(22) Date de dépôt: 23.06.2016
(51) Int. Cl.: A01D 34/685

(54) **TONDEUSE ÉLECTRIQUE À LAMES MULTIPLES**
RASENMÄHER MIT MEHREREN MESSERN
LAWN MOWER WITH MULTIPLE BLADES

(30) Priorité: 27.07.2015 FR 1557162
(43) Date de publication de la demande: 06.06.2018
(73) Titulaire: PELLENC, 84120 Pertuis (FR)
(72) Inventeur: PELLENC, Roger, 84120 Pertuis (FR)
(74) Mandataire: Decobert, Jean-Pascal
(86) Numéro de dépôt international: PCT/FR2016/051540
(87) Numéro de publication internationale: WO 2017/017322

(56) Documents cités:
- EP-B1- 0 367 027
- DE-A1- 10 230 788
- DE-A1-102004 047 790
- FR-A1- 2 589 668
- GB-A- 2 483 975
- US-A- 2 926 478
- US-A- 4 031 696
- US-A- 4 041 679
- US-A- 4 232 505
- US-A- 4 464 886
- US-A- 5 442 901
- US-B1- 8 136 333

## Description

### Domaine technique

La présente invention concerne une tondeuse agraire, telle qu'une tondeuse à gazon ou une tondeuse-débroussailleuse. Elle concerne plus précisément une tondeuse pourvue d'un nombre de lames supérieur à un. Il peut s'agir, en particulier, d'une tondeuse à deux ou à trois lames.

Par ailleurs, l'invention concerne des tondeuses à unité de coupe électrique, c'est à dire des tondeuses dont les lames de coupe sont mues par un moteur électrique.

L'invention trouve des applications dans le domaine technique des tondeuses agraires à conducteur marchant, des tondeuses à conducteur porté, des tondeuses commandées à distance et dans le domaine des tondeuses robotisées autonomes.

### Etat de la technique antérieure.

Bien que n'ayant pas trait à des tondeuses à unité de coupe électrique, une illustration de l'état de la technique des tondeuses à lames multiples est donnée, par exemple, par les documents suivants :
- FR 2 601 844, FR 2 915 846, FR 2 589 668, US 2 464 886, GB-A-2483975 et US-A-2926478.

Le document US-A-2926478 montre une tondeuse selon le préambule de la revendication 1.

Les tondeuses à lames rotatives multiples, du type de celles illustrées par ces documents, sont généralement des tondeuses de taille importante. Par ailleurs, et en raison de la pluralité des lames qui les équipent, ces tondeuses sont généralement pourvues d'une motorisation puissante à moteur thermique. A l'exception des tondeuses remorquées, le moteur thermique sert à l'entrainement des lames et à la propulsion de la tondeuse.

L'invention envisage de mettre à profit de nouvelles générations de batteries de forte capacité pour la réalisation de tondeuses à lames multiples et à moteur électrique.

### Exposé de l'invention

La motorisation de tondeuses à lames multiples avec un moteur électrique, ne se résume pas à un simple remplacement d'un moteur thermique par un moteur électrique.

En effet, et conformément à l'invention, l'utilisation d'un moteur électrique s'accompagne de mesures permettant de considérablement réduire l'encombrement global et la masse de la tondeuse. De plus, l'utilisation de batteries s'accompagne généralement de mesures permettant d'atteindre des rendements énergétiques élevés pour obtenir une autonomie de fonctionnement la plus importante possible. Ces mesures permettent une utilisation d'une tondeuse à lames multiples dans des applications comparables à celles des tondeuses légères à lame unique tout en assurant des largeurs de coupe plus importantes. Des largeurs de coupe supérieures ou égales à 60 cm peuvent être obtenues avec une tondeuse à lames multiples, alors qu'une largeur de coupe d'une tondeuse électrique à lame unique se situe de façon générale dans des valeurs inférieures à 50 cm.

Un but de l'invention est de proposer une tondeuse particulièrement compacte et maniable malgré sa largeur de coupe importante et permettant sa configuration en tondeuse à conducteur porté, en tondeuse à conducteur marchant, en tondeuse commandée à distance ou encore en tondeuse robotisée autonome. Ces dernières configurations sont en effet généralement interdites aux tondeuses à lames multiples connues en raison de leur dimension et de leur poids.

Un but de l'invention est encore de proposer une tondeuse légère pouvant être nettoyée et entretenue facilement.

Un autre but encore est de proposer une tondeuse électrique avec un nombre de fils et de connexions électriques limités.

Enfin un but de l'invention est de proposer une tondeuse particulièrement fiable et durable.

Pour atteindre ces buts l'invention propose une tondeuse électrique telle que définie par la revendication 1.

Conformément à l'invention, le moteur électrique est ménagé dans le carter entre le plateau de coupe et le mécanisme de synchronisation des lames.

La caractéristique de l'invention selon laquelle le moteur électrique d'entrainement des lames est situé dans le carter entre le plateau de coupe et le mécanisme de synchronisation des lames permet une construction particulière compacte et rationnelle de l'unité de coupe.

Dans la description qui suit, on fait principalement référence à un moteur électrique unique. Il est toutefois précisé qu'un moteur électrique peut être associé à chaque lame. Dans ce cas, l'ensemble des moteurs utilisés pour l'entrainement des lames est situé dans le carter entre le plateau de coupe et le mécanisme de synchronisation.

Le moteur électrique est de préférence orienté de manière que son axe de rotation soit perpendiculaire au plan de coupe dans lequel tournent les lames de coupe. Dans une position de fonctionnement de la tondeuse l'axe du moteur est ainsi sensiblement vertical.

L'axe du moteur peut correspondre à l'axe d'un arbre d'une lame de coupe. Cet aspect est décrit plus en détail dans la suite du texte.

L'unité de coupe comprend de préférence plusieurs étages ou niveaux verticalement superposés. Un premier niveau qui se trouve au voisinage du sol dans une position d'utilisation de la tondeuse correspond au plateau de coupe. Il comprend les lames de coupe. Les lames sont montées rotatives sur des arbres de lame s'étendant selon des axes sensiblement perpendiculaires à un plan de coupe. Les lames s'étendent ainsi selon un plan sensiblement parallèle au sol. A chaque lame correspond une zone de travail circulaire située dans le plan de coupe. Les zones de travail des différentes lames peuvent présenter une ou plusieurs plages de recouvrement balayées par deux lames voisines respectivement. Dans le cas où les lames présentent la même longueur, cela signifie que les arbres de lames sont distants d'une dimension inférieure à la longueur d'une lame.

Au-dessus du premier niveau des lames, un deuxième niveau reçoit un carter comprenant le moteur d'entrainement des lames. Le deuxième niveau s'étend également selon un plan sensiblement parallèle au sol, dans une position d'utilisation de la tondeuse.

Au-dessus du deuxième niveau, un troisième niveau reçoit le mécanisme de synchronisation des lames. De préférence, les organes du mécanisme de synchronisation sont également agencés dans le carter et selon un plan sensiblement parallèle au sol.

Un éventuel quatrième niveau, au-dessus et au voisinage du troisième niveau peut recevoir une unité de pilotage électronique de la tondeuse et en particulier du moteur électrique. De préférence, le quatrième niveau constitue la partie haute du carter et peut consister en un couvercle du carter recevant l'unité de pilotage électronique de la tondeuse.

Enfin un éventuel cinquième niveau, au-dessus du quatrième niveau, ou à la place du quatrième niveau, peut recevoir une ou plusieurs batteries pour l'alimentation électrique du moteur. La batterie, ne fait cependant pas nécessairement partie de l'unité de coupe et peut être localisée à un autre endroit de la tondeuse. De préférence, les niveaux un à quatre constituant l'unité de coupe, et en particulier le plateau de coupe, le carter et le couvercle du carter, sont rigidement solidaires entre eux.

Le mécanisme de synchronisation peut avoir plusieurs fonctions. Une fonction principale est la synchronisation mécanique des lames. La synchronisation des lames permet aux lames de tourner de concert, avec la même vitesse de rotation et en maintenant un écartement angulaire constant entre les positions angulaires des lames voisines.

Un écartement constant entre les positions angulaires des lames voisines dans leur zone de travail permet d'éviter l'entrechoquement des lames, notamment lorsque les zones de travail présentent une plage de recouvrement mutuel. L'écartement angulaire de lames voisines est de préférence de l'ordre de 90°, et en tout cas suffisant pour éviter que les lames ne viennent s'entrechoquer lors de la rotation ou ne viennent pincer des végétaux à couper.

La tondeuse peut comporter une unité de commande électronique du ou des moteurs électriques d'entrainement des lames. En cas de pluralité de moteurs d'entrainement des lames, l'unité de commande électronique est également configurée pour synchroniser la rotation des moteurs électriques associés aux différentes lames de coupe.

Dans ce cas les lames bénéficient d'une double synchronisation mécanique et électrique.

Une deuxième fonction du mécanisme de synchronisation des lames peut être de transmettre le mouvement du moteur électrique à l'ensemble des lames de l'unité de coupe. Le mécanisme de synchronisation constitue alors une transmission. La fonction de transmission est importante lorsque l'unité de coupe ne comprend qu'un unique moteur électrique d'entrainement des lames dont le mouvement doit être distribué aux différentes lames.

Selon une réalisation particulière de la tondeuse, celle-ci peut comporter un cadre formant un châssis. Le cadre est de préférence un cadre tubulaire s'étendant selon un plan sensiblement horizontal dans une position de fonctionnement de la tondeuse. Dans ce cas, une partie de l'unité de coupe comprenant le moteur électrique et le mécanisme de synchronisation, et en particulier les deuxième, troisième et quatrième niveaux de l'unité de coupe, peut être configurée pour s'étendre à travers le cadre tubulaire, de manière à dépasser au-dessus du cadre tubulaire. Le premier niveau, quant à lui, reste en dessous du plan du cadre.

Un tel agencement permet une construction particulièrement compacte et maniable de la tondeuse.

L'unité de coupe peut être montée mobile sur le cadre avec une possibilité de déplacement selon un axe perpendiculaire au plan du cadre. Le déplacement de l'unité de coupe se fait donc essentiellement selon une direction perpendiculaire au sol, dans une position d'utilisation de la tondeuse.

Ainsi, la hauteur de l'unité de coupe par rapport au plan du cadre est variable. La modification de la hauteur de l'unité de coupe par rapport au cadre permet de régler la distance entre les lames de coupe et le sol sur lequel repose la tondeuse, et ainsi fixer une hauteur de coupe souhaitée.

La possibilité de fixer la hauteur de coupe directement par une mobilité de l'unité de coupe permet d'utiliser des roues à hauteur fixe par rapport au cadre. Les roues peuvent être montées également sur le cadre. Cette mesure permet d'augmenter la robustesse de la fixation des roues et facilite le remplacement des roues lors d'une opération de maintenance.

L'unité de coupe peut être montée sur le châssis de la tondeuse au moyen d'une fixation à parallélogramme, à rampe ou à coulisseaux, ou d'une autre manière appropriée pour autoriser son réglage en hauteur. Le réglage de la hauteur est envisageable lors de la tonte, et sans arrêter la machine.

La tondeuse peut comporter en outre au moins un vérin électrique pour le déplacement de l'unité de coupe par rapport au cadre. L'utilisation d'un vérin électrique facilite la modification de la hauteur de coupe en cours de tonte. Elle permet même une adaptation continue de la hauteur de coupe, si nécessaire.

Comme évoqué ci-dessus, l'unité de coupe comporte un carter fixé sur le plateau de coupe. Le carter peut renfermer le moteur, le mécanisme de synchronisation des lames, et une unité de pilotage de la tondeuse. Le carter est fixé rigidement sur le plateau de coupe, et de préférence sur une jupe de protection des lames du plateau de coupe, de manière à former une unité monolithique.

Le fait que le plateau de coupe soit fixé au carter plutôt que d'être formé d'une seule pièce avec le carter permet de remplacer le plateau de coupe, et en particulier la jupe de protection des lames lorsqu'elle est abimée.

Selon l'invention, une partie du carter, formant logement pour le moteur électrique est configurée pour s'étendre en partie dans le plateau de coupe. En particulier, le plateau de coupe comprend une jupe de protection des lames et la partie du carter formant logement pour le moteur présente des fusées qui traversent la jupe.

Le fait qu'une partie du carter s'étende dans le plateau de coupe permet de rapprocher cette partie des lames de coupe et de refroidir ainsi le carter et les organes qu'il contient, par un flux d'air généré par les lames de coupe. En particulier l'air des lames de coupe peut être mis à profit pour refroidir le moteur et l'unité de pilotage logés dans le carter.

Le carter est de préférence un carter en aluminium ou en un alliage léger à base d'aluminium ou de magnésium. Un tel matériau est à la fois solide et bon conducteur de la chaleur. Il favorise ainsi le refroidissement des organes contenus dans le carter et permet de constituer un carter étanche aux poussières, évitant ainsi l'encrassement du moteur électrique.

Le carter peut aussi être en matière plastique, plus économique, mais avec une capacité de conduction thermique moins bonne.

Selon un agencement particulièrement avantageux de l'unité de coupe, l'unité de pilotage comprend une carte électronique de commande du moteur disposée juste au-dessus du mécanisme de synchronisation. La carte électronique est alors pourvue d'un capteur magnétique, par exemple un capteur magnétorésistif ou un capteur à effet Hall, coopérant avec un aimant solidaire de l'un parmi un arbre de lame de coupe, un arbre du moteur électrique et un arbre du mécanisme de synchronisation. De préférence l'aimant est solidaire directement de l'arbre du moteur électrique.

Le capteur magnétique permet de mesurer la position angulaire de l'aimant. La carte électronique exploite la mesure du capteur magnétique pour déterminer, entre autres, la position angulaire du rotor du moteur et pour piloter l'alimentation électrique du moteur. Une telle alimentation pilotée est utilisée notamment pour des moteurs électriques sans balai.

La disposition de l'unité de pilotage et de la carte électronique juste au-dessus du mécanisme de synchronisation permet de monter le capteur magnétique directement sur la carte électronique. Ceci permet d'éviter une liaison filaire entre le capteur et la carte électronique, et améliore la compacité de l'unité de coupe. La fiabilité de la commande du moteur en est aussi grandement améliorée.

Le signal du capteur magnétique peut encore être utilisé pour déterminer d'autres paramètres tels qu'une vitesse effective de rotation des lames de coupe, ou un blocage des lames, par exemple.

Toujours selon un agencement avantageux de l'unité de coupe, le carter peut être pourvu d'un couvercle amovible donnant un accès à l'unité de pilotage et au mécanisme de synchronisation. Le couvercle facilite grandement des opérations de maintenance, et en particulier de graissage des pièces tournantes de l'unité de coupe.

Les lames de coupe sont montées sur des arbres rotatifs reçus sur des paliers. Conformément à une réalisation particulière de l'unité de coupe, les paliers peuvent être montés dans le carter. Les contraintes des lames sont ainsi transmises au cadre formant châssis par l'intermédiaire du carter de l'unité de coupe.

Dans une réalisation particulière de l'unité de coupe, les arbres de lame présentent respectivement une première extrémité pour le montage d'une lame de coupe et une deuxième extrémité, opposée à la première extrémité, la deuxième extrémité étant reliée au mécanisme de synchronisation, de manière à maintenir un écart angulaire constant entre les lames de coupe, de la manière indiquée ci-dessus.

Le mécanisme de synchronisation peut être un mécanisme à courroie crantée. Dans ce cas la deuxième extrémité des arbres de lame est respectivement reliée à une poulie crantée coopérant avec la courroie crantée.

Le mécanisme de synchronisation peut aussi être un mécanisme à engrenage. Dans ce cas, la deuxième extrémité des arbres de lame est respectivement reliée à une roue dentée coopérant avec l'engrenage.

Le mécanisme de synchronisation peut aussi être un mécanisme mixte à engrenage et courroie crantée. Dans ce cas, la deuxième extrémité des arbres de lame est respectivement reliée à une poulie crantée coopérant avec une courroie crantée reliée à un ensemble intermédiaire à poulie crantée et à engrenage.

Dans une configuration de l'unité de coupe à moteur unique, une première lame de coupe peut être montée sur un arbre de lame moteur rigidement solidaire en rotation d'un rotor du moteur électrique, et au moins une deuxième lame de coupe peut être montée respectivement sur au moins un arbre de lame secondaire couplé à l'arbre moteur par l'intermédiaire du mécanisme de synchronisation. Dans ce cas, et comme indiqué précédemment, le mécanisme de synchronisation forme une transmission entre l'arbre moteur et le ou les arbres secondaires.

Le moteur électrique présente ainsi un arbre de sortie qui est l'arbre de lame moteur.

Dans une réalisation particulière d'une tondeuse conforme à l'invention le plateau de coupe peut comporter deux lames contrarotatives, et une jupe de protection des lames pourvue d'un canal d'éjection central. Le mouvement rotatif des lames est utilisé pour la tonte et aussi pour l'éjection des reliefs de tonte à travers le canal d'éjection central.

L'utilisation de lames contrarotatives et d'un canal d'éjection central contribue à la compacité de la tondeuse.

La tondeuse peut être équipée, par ailleurs, d'un bac de récupération de tonte, amovible, connecté au canal d'éjection central.

De manière à faciliter son montage et dans un souci de compacité, le bac de récupération de tonte peut être fixé sur l'unité de coupe. Le bac de tonte est alors mobile verticalement par rapport au cadre de façon conjuguée avec l'unité de coupe.

La tondeuse peut comporter des roues arrière motrices couplées au moteur électrique de manière à assurer l'avancement de la tondeuse. Le couplage peut être réalisé de manière classique par une boite de transmission.

La tondeuse peut aussi comporter des roues arrière motrices couplées à au moins un moteur électrique distinct du moteur électrique d'entrainement des lames de coupe. En particulier chaque roue peut être couplée à un moteur d'entrainement qui lui est propre.

D'autres caractéristiques et avantages de l'invention ressortent de la description qui suit en référence aux figures des dessins. Cette description est donnée à titre purement illustratif et non limitatif.

### Brève description des figures

La figure 1 est une vue d'ensemble d'une tondeuse conforme à l'invention.
La figure 2 est une vue de côté de de la tondeuse de la figure 1, un bac de tonte étant retiré et un guidon étant replié en position de stockage.
La figure 3 est une coupe d'une unité de coupe d'une tondeuse conforme à l'invention, vue selon un plan A-A de la figure 2.
La figure 4A est une vue simplifiée d'une réalisation particulière d'un mécanisme de synchronisation à engrenages de l'unité de coupe.
La figure 4B est une vue simplifiée d'une réalisation particulière d'un mécanisme de synchronisation mixte à engrenages et courroie crantée de l'unité de coupe.
La figure 4C est une vue schématique d'une réalisation particulière d'un mécanisme de synchronisation à courroie crantée de l'unité de coupe.

### Description détaillée de modes de mise en œuvre de l'invention

Dans la description qui suit des parties identiques, similaires ou équivalentes des différentes figures sont repérées avec les mêmes signes de référence de manière à pouvoir se reporter d'une figure à l'autre.

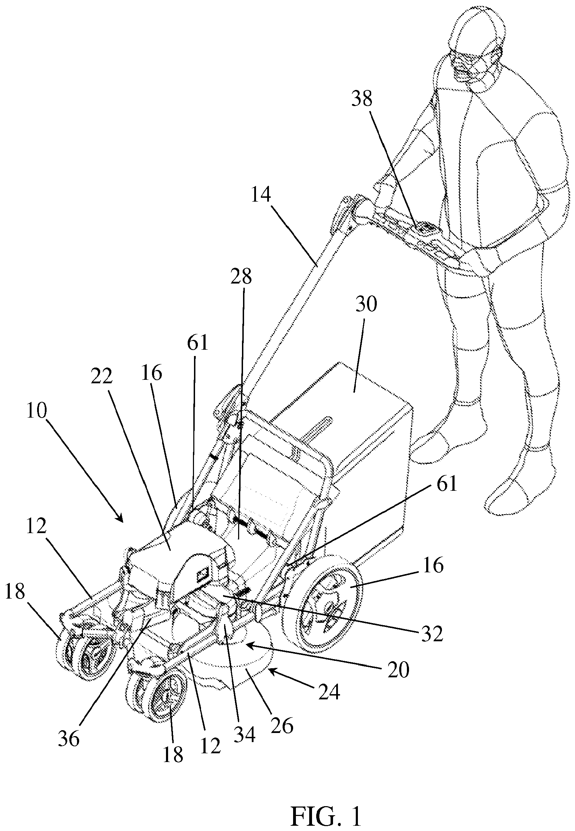

Par ailleurs les termes "horizontal", "vertical", "haut", "bas", "supérieur", "inférieur", "au-dessus" et "en-dessous", "avant" et "arrière" sont utilisés en référence à une position et une utilisation normale de la tondeuse à conducteur marchant, sur un terrain plat et horizontal, correspondant à la figure 1.

La figure 1 montre une réalisation particulière d'une tondeuse 10 conforme à l'invention. Il s'agit d'une tondeuse à conducteur marchant. Il convient de préciser que l'invention peut également être mise en oeuvre pour une tondeuse à conducteur porté, une tondeuse commandée à distance ou une tondeuse robotisée à déplacement autonome.

La tondeuse 10 comprend un cadre 12, formant châssis, sur lequel sont agencés différents organes. Le cadre s'étend de manière sensiblement horizontale. Il est réalisé de préférence sans soudure, avec des éléments de tube assemblés par vissage et au moyen de manchons adaptés. Le cadre reçoit pour l'essentiel un guidon 14 articulé, des roues arrière 16 motrices, des roues avant libres 18, une unité de coupe 20, et une batterie 22 située au-dessus de l'unité de coupe 20.

Les roues avant 18, libres, sont montées sur le cadre avec une liberté de pivotement vertical à 360°. Il s'agit de roues doubles dans l'exemple illustré. Les roues arrière motrices 16 sont chacune pourvue d'un moteur électrique 61, pour le déplacement de la tondeuse.

L'unité de coupe 20 comprend un plateau de coupe 24. On entend par plateau de coupe un ensemble comprenant pour l'essentiel les lames de coupe, non visibles sur la figure, et une jupe de protection des lames 26. Dans l'exemple illustré, le plateau de coupe 24 est un plateau à deux lames contrarotatives. On entend par lames contrarotatives, des lames dont le sens de rotation est opposé. Le mouvement opposé des lames est mis à profit pour l'évacuation des reliefs de tonte.

Le plateau de coupe se prolonge en effet, à l'arrière des lames, par un canal d'éjection 28 des reliefs de tonte auquel est connecté un bac de récupération de tonte 30 amovible. Dans l'exemple illustré, le bac 30 est fixé sur l'unité de coupe.

Un carter 32 de l'unité de coupe 20, en alliage léger, constitue une partie supérieure de l'unité de coupe 20. Le carter 32 se trouve au-dessus du plateau de coupe 24 et s'étend à travers le cadre tubulaire 12. L'unité de coupe est située en dessous d'un portique 34, monté sur le cadre tubulaire 12, prévu pour la fixation de la batterie 22. La batterie 22 est prévue pour l'alimentation électrique du moteur de l'unité de coupe, et des moteurs 61 des roues arrière.

A l'avant de la tondeuse on peut observer un vérin électrique 36 prévu pour un déplacement vertical de l'unité de coupe par rapport au cadre 12. Le fonctionnement du vérin peut être contrôlé par une unité de pilotage de la tondeuse ou par l'intermédiaire d'une interface de commande manuelle 38 ménagée au sommet du guidon 14.

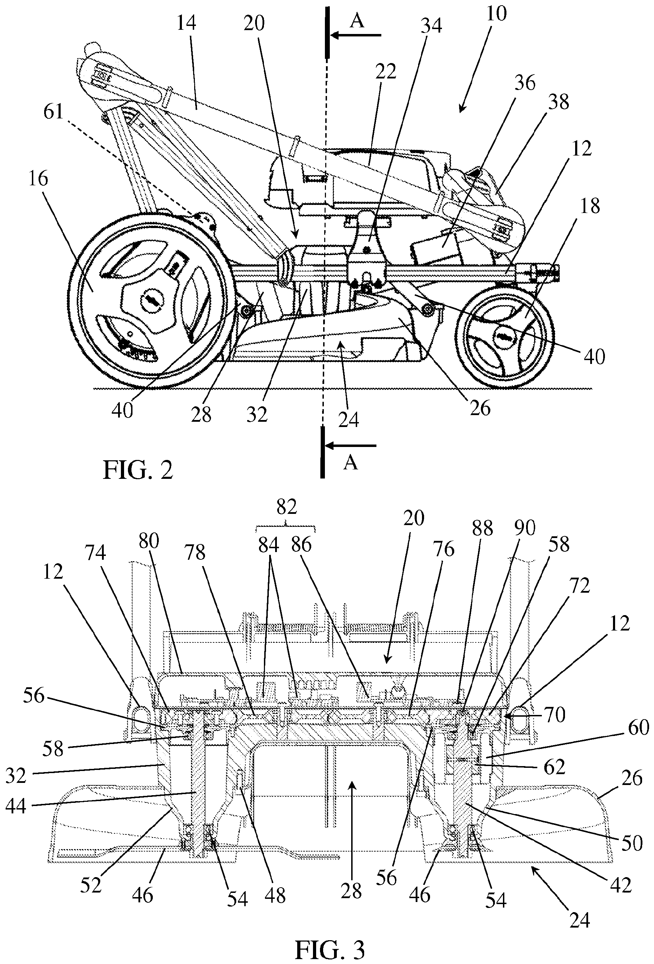

La figure 2, est une vue de côté de la tondeuse de la figure 1, sur laquelle on a retiré le bac de récupération de tonte 30, et sur laquelle le guidon 14 est représenté en position repliée. La figure 2 permet de mieux voir le passage de la partie supérieure de l'unité de coupe 20 à travers le cadre 12, en dessous de la batterie 22. L'unité de coupe 20 est maintenue sur le cadre 12 par l'intermédiaire de petites biellettes 40 formant un parallélogramme de suspension. Les biellettes 40 sont montées pivotantes à la fois sur le cadre 12 et sur le plateau de coupe 24, au sommet de la jupe 26. L'actionnement du vérin 36 permet de relever ou d'abaisser l'unité de coupe. Il convient de noter que, selon ce mode de réalisation, le déplacement vertical de l'unité de coupe 20 par rapport au cadre 12, s'accompagne d'un pivotement des biellettes et donc d'un léger déplacement horizontal, tout en assurant le déplacement du plateau de coupe parallèlement au cadre. Le déplacement vertical de l'unité de coupe 20 permet de régler une hauteur de coupe.

La figure 3 est une coupe transversale de l'unité de coupe selon le plan A-A de la figure 2 passant par le moteur et les arbres de lames 42, 44. Les arbres de lame s'étendent selon des axes verticaux et parallèles. Chaque arbre de lame 42, 44 présente une première extrémité sur laquelle est montée une lame 46. Dans l'exemple illustré les deux lames 46 sont montées sur les arbres de lame avec un écart angulaire relatif de 90°. Une distance entre les arbres de lame 42, 44 est un peu inférieure à la longueur d'une lame 46. Ainsi les zones de travail des lames présentent une plage de recoupement, au milieu du plateau de coupe, en face du canal d'éjection 28 de la tonte.

La jupe 26 de protection des lames est rigidement fixée au carter 32, au moyen de vis 48 et protège la face inférieure du carter tournée vers les lames. La jupe est de préférence en aluminium, en alliage léger à base d'aluminium ou de magnésium, ou en matière plastique. Elle peut être remplacée lorsqu'elle est détériorée.

Le carter 32 présente, au-dessus de chaque lame, une fusée 50, 52 de passage d'arbre dont l'extrémité basse traverse la jupe 26. Les fusées sont pourvues en leur extrémité basse respectivement d'un palier 54 de maintien de l'arbre de lame. L'extrémité haute des fusées est coiffée respectivement d'un couvercle 56, pourvu également d'un palier 58, pour le maintien des arbres de lame dans leur partie supérieure.

Dans l'exemple de réalisation illustré par la figure 3, la première fusée 50, recevant l'arbre de lame 42 contient un moteur électrique 60 d'entrainement des lames. Il s'agit d'un moteur sans balai dont le rotor 62 est rigidement solidaire du premier arbre de lame 42. Le premier arbre de lame 42 est ainsi désigné par "arbre de lame moteur". La deuxième fusée 52 forme un logement susceptible d'accueillir un moteur électrique pour la seconde lame, comparable au moteur électrique 60 de la fusée 50. Toutefois, dans l'exemple décrit en référence à la figure 3, le logement de la deuxième fusée 52 ne contient pas de moteur. Le deuxième arbre de lame 44 qui passe par la deuxième fusée 52 est désigné par "arbre de lame secondaire" dans la suite du texte.

Au-dessus des fusées et du moteur 60 se trouve un mécanisme de synchronisation 70. Le mécanisme de synchronisation a une double fonction dans l'exemple de réalisation décrit en référence à la figure 3. Une première fonction est de garantir un écart angulaire constant entre les arbres de lame 42,44 et entre les lames 46 qui y sont montées, au cours de la rotation des lames 46. Une deuxième fonction est la transmission du mouvement de l'arbre de lame moteur 42 à l'arbre de lame secondaire 44 de manière que le moteur électrique 60 puisse entrainer les deux lames 46. Lorsqu'un deuxième moteur électrique occupe la deuxième fusée 52, la fonction de transmission devient moins importante voire superflue, dans la mesure où chaque lame peut être mue par son propre moteur. En revanche la fonction de synchronisation reste essentielle pour éviter que les lames ne s'entrechoquent. L'arbre de lame moteur 42 et l'arbre de lame secondaire présentent chacun à leur extrémité supérieure, opposée à la lame, une roue dentée 72, 74. Deux roues dentées intermédiaires 76, 78 transmettent le mouvement de la roue dentée 72 de l'arbre de lame moteur 42 à la roue dentée 74 de l'arbre de lame secondaire 44. Les roues dentées intermédiaires 76, 78 sont montées sur des pivots solidaires du carter 32, par l'intermédiaire de roulements. L'utilisation de deux roues dentées intermédiaires permet d'obtenir des lames contrarotatives, l'arbre de lame moteur 42 et l'arbre de lame secondaire 44 ayant des sens de rotation opposés. Le sens de rotation des lames est tel que le mouvement des lames entraine les reliefs de tonte dans le canal d'éjection 28.

Un couvercle 80 ferme la partie supérieure du carter 32. Le couvercle reçoit une unité 82 de pilotage de la tondeuse. L'unité de pilotage 82 comprend des cartes électroniques 84 pour la commande de moteurs d'entrainement des roues arrière motrices, et, le cas échéant, des cartes électroniques commandant le déplacement de la tondeuse selon un mode de progression robotisé autonome. L'unité de pilotage 82 comprend également une carte électronique 86 pour la commande du moteur électrique 60 d'entraînement des lames. La carte électronique 86 comprend en particulier des transistors à effet de champ pour la commutation des courants d'alimentation du moteur électrique 60.

Dans l'exemple de réalisation décrit en référence à la figure 3, le moteur électrique 60 est un moteur sans balai. Or, pour un tel moteur, il est nécessaire de connaître la position du rotor, afin établir les courants d'alimentation du stator et piloter ainsi la rotation du rotor.

La carte électronique 86 comprend à cet effet un capteur magnétique 88, tel qu'un capteur magnétorésistif ou un capteur à effet Hall, directement soudé sur la carte et maintenu par la carte en face d'un petit aimant 90 logé dans un alésage de l'extrémité supérieure de l'arbre de lame moteur 42. Le capteur retenu dans la solution décrite est un capteur à effet Hall. L'aimant 90 est entrainé en rotation par l'arbre de lame moteur 42 et reflète ainsi la position angulaire du rotor. En effet, et comme indiqué précédemment, le rotor du moteur électrique 60 est solidaire de l'arbre de lame moteur 42. La rotation de l'aimant 90 devant le capteur à effet Hall 80 génère ainsi un signal électrique directement exploitable pour déterminer les courants d'alimentation du moteur.

Le signal du capteur à effet Hall peut également être exploité par la carte électronique 86 pour déterminer des paramètres supplémentaire pour le pilotage de la tondeuse tels qu'une vitesse de rotation des lames, un blocage des lames ou une surcharge du moteur.

Lorsque l'unité de coupe est pourvue de deux moteurs, un pour chaque lame, la carte électronique de commande des moteurs peut aussi être configurée pour une synchronisation électronique des moteurs. La synchronisation électronique permet de soulager le mécanisme de synchronisation, et de réduire d'éventuelles pertes d'énergies dans ce mécanisme.

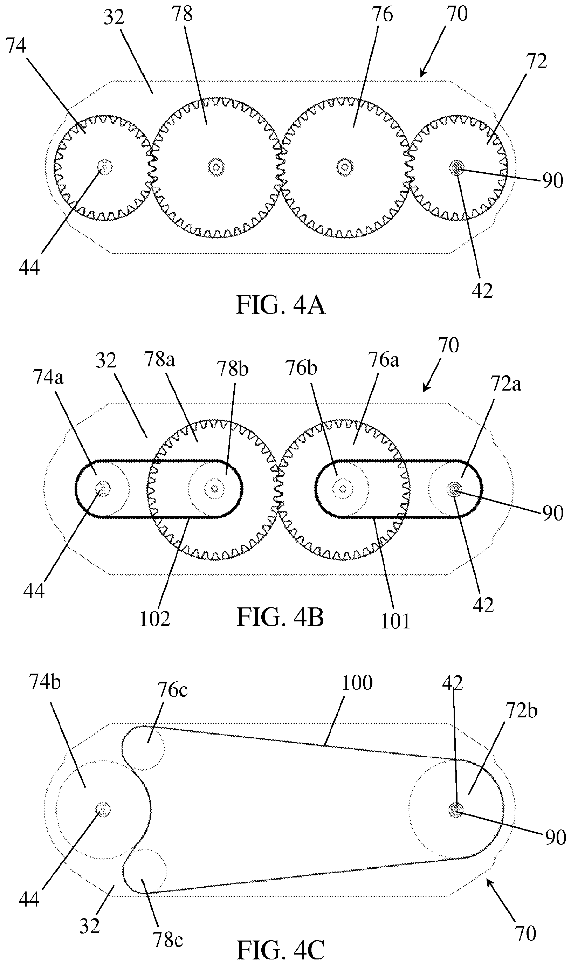

La figure 4A représente de manière schématique le mécanisme de synchronisation 70 vu du dessus. On y distingue la roue dentée 72, solidaire en rotation de l'arbre de lame moteur 42, deux roues dentées intermédiaires 76, 78, montés à rotation libre sur des pivots, et une roue dentée 74 solidaire en rotation de l'arbre de lame secondaire 44. Ainsi, une rotation en sens horaire de la roue dentée 72 entraine une rotation dans le sens antihoraire de la roue dentée 74, assurant le mouvement contrarotatif des lames de coupe.

La figure 4B représente de façon schématique une autre possibilité de réalisation d'un mécanisme de synchronisation 70 mixte à courroie crantée et à roues dentées. Les roues dentées 72 et 74 sont remplacées par des poulies crantées 72a, 74a. Les poulies crantées sont respectivement solidaires en rotation des arbres de lame 42, 44. Les roues dentées intermédiaires 76 et 78 de la figure 4A sont ici remplacées par des ensembles solidaires de roue dentée et de poulie crantée 76a, 76b et 78a, 78b associées à deux courroies crantées 101 et 102. Ainsi, une rotation en sens horaire de la poulie crantée 72a entraine une rotation dans le sens horaire de la poulie crantée 76b, et de la roue dentée 76a, par l'intermédiaire de la courroie crantée 101. La roue dentée 78a, engrenée sur la roue dentée 76a est entrainée dans le sens antihoraire. La poulie crantée 78b, solidaire en rotation de la roue dentée 78a, entraine en rotation dans le sens antihoraire la courroie crantée 102 et donc la poulie crantée 74a. Le mécanisme de synchronisation mixte assure ainsi le mouvement contrarotatif des lames de coupe.

La figure 4C représente de façon schématique encore une autre possibilité de réalisation d'un mécanisme de synchronisation 70 à courroie crantée. Les roues dentées 72 et 74 sont remplacées par des poulies crantées 72b, 74b. Les poulies crantées sont respectivement solidaires en rotation des arbres de lame 42, 44. Les roues dentées intermédiaires 76 et 78 de la figure 4A sont ici remplacées par une courroie crantée 100 associée à des poulies crantées intermédiaires 76c et 78c. Ainsi, une rotation en sens horaire de la poulie crantée 72b entraine une rotation dans le sens anti-horaire de la courroie crantée 100 et donc de la poulie crantée 74c, assurant le mouvement contrarotatif des lames de coupe.

## Revendications

1. Tondeuse électrique (10) comprenant une unité de coupe (20) avec:
- un plateau de coupe (24) pourvu d'au moins deux lames de coupe (46) montées respectivement sur des arbres de lame (42, 44),
- au moins un moteur électrique (60) d'entrainement des lames de coupe,
- un mécanisme (70) de synchronisation des lames,
dans laquelle :
- le moteur électrique (60) est ménagé dans un carter (32) entre le plateau de coupe (24) et le mécanisme (70) de synchronisation des lames,
**caractérisée en ce que** :
- le carter (32) est fixé sur le plateau de coupe (24) et
- une partie du carter (32), formant logement pour le moteur électrique (60), s'étend en partie dans le plateau de coupe (24),
- le plateau de coupe comprenant une jupe (26) de protection des lames de coupe et dans laquelle la partie du carter (32) formant logement pour le moteur présente des fusées (50, 52) traversant ladite jupe (26).

2. Tondeuse électrique selon la revendication 1, comprenant un cadre (12), formant châssis, le cadre tubulaire s'étendant selon un plan sensiblement horizontal dans une position de fonctionnement de la tondeuse, et dans lequel une partie de l'unité de coupe (20) comprenant le moteur électrique et le mécanisme de synchronisation (70) est configurée pour s'étendre à travers le cadre.

3. Tondeuse électrique selon l'une des revendications 1 ou 2 dans laquelle l'unité de coupe (20) est montée mobile sur le cadre (12) avec une possibilité de déplacement selon un axe perpendiculaire au plan du cadre.

4. Tondeuse électrique selon la revendication 3, comprenant au moins un vérin électrique (36) pour un déplacement de l'unité de coupe par rapport au cadre (12).

5. Tondeuse électrique selon l'une quelconque des revendications précédentes, dans laquelle le carter renferme le moteur électrique (60), le mécanisme (70) de synchronisation des lames, et une unité (82) de pilotage de la tondeuse.

6. Tondeuse électrique selon la revendication 5, dans laquelle l'unité de pilotage (82) comprend une carte électronique (86) de commande du moteur électrique (60) la carte électronique (86) étant disposée au-dessus du mécanisme (70) de synchronisation et la carte électronique (86) étant pourvue d'un capteur (80) magnétique, tel qu'un capteur magnétorésistif ou un capteur à effet Hall, coopérant avec un aimant (90) solidaire de l'un parmi un arbre de lame de coupe (42,44), un arbre (42) du moteur électrique et un arbre (42) du mécanisme de synchronisation.

7. Tondeuse électrique selon la revendication 6, dans laquelle le carter (32) comprend un couvercle (80) amovible donnant un accès à l'unité de pilotage (86) et au mécanisme (70) de synchronisation.

8. Tondeuse électrique selon l'une quelconque des revendications précédentes, comprenant des paliers (54) de montage des arbres des lames de coupe, les paliers étant montés dans le carter (32).

9. Tondeuse électrique selon l'une quelconque des revendications précédentes, dans laquelle le carter (32) est un carter en alliage léger.

10. Tondeuse électrique selon l'une quelconque des revendications précédentes, dans laquelle les arbres de lame (42, 44) présentent respectivement un première extrémité pour le montage d'une lame de coupe (60) et une deuxième extrémité, opposée à la première extrémité, la deuxième extrémité étant reliée au mécanisme de synchronisation (70), de manière à maintenir un écart angulaire constant entre les lames de coupe.

11. Tondeuse électrique selon la revendication 10, dans laquelle le mécanisme de synchronisation (70) est un mécanisme à courroie crantée (92) et dans laquelle la deuxième extrémité des arbres de lame est respectivement reliée à une poulie crantée (72p, 74p) coopérant avec la courroie crantée.

12. Tondeuse électrique selon la revendication 10, dans laquelle le mécanisme de synchronisation (70) est un mécanisme à engrenage et dans laquelle la deuxième extrémité des arbres de lame est respectivement reliée à une roue dentée (72, 74) coopérant avec l'engrenage (72, 74, 76, 78).

13. Tondeuse électrique selon la revendication 10, dans laquelle le mécanisme de synchronisation (70) est un mécanisme mixte à engrenage (76a, 76b) et à courroie crantée (101, 102).

14. Tondeuse électrique selon l'une quelconque des revendications précédentes, comprenant une lame de coupe (60) montée sur un arbre de lame moteur (42) rigidement solidaire en rotation d'un rotor (62) du moteur électrique (60), et au moins une lame (46) montée respectivement sur au moins un arbre de lame secondaire (44) couplé à l'arbre de lame moteur (42) par l'intermédiaire du mécanisme de synchronisation (70), le mécanisme de synchronisation formant une transmission entre l'arbre moteur et l'arbre secondaire.

15. Tondeuse électrique selon l'une quelconque des revendications précédentes, comprenant une pluralité de moteurs électriques (60), un moteur électrique étant respectivement associé à chaque lame de coupe.

16. Tondeuse électrique selon la revendication 15, comprenant une unité de commande (86) des moteurs électriques, l'unité de commande étant configurée pour synchroniser les moteurs électriques associés aux lames de coupes.

17. Tondeuse électrique selon l'une quelconque des revendications précédentes, dans laquelle le plateau de coupe comprend deux lames contrarotatives (46), et une jupe (26) de protection des lames pourvue d'un canal d'éjection central (28).

18. Tondeuse électrique selon la revendication 17 comprenant un bac (30) de récupération de tonte, connecté au canal d'éjection central (28) .

19. Tondeuse électrique selon la revendication 18, dans laquelle le bac de récupération est fixé sur l'unité de coupe (20).

20. Tondeuse électrique selon l'une quelconque des revendications précédentes, comprenant des roues arrières motrices (16) couplées au moteur électrique (60) d'entrainement des lames de coupe.

21. Tondeuse électrique selon l'une des revendications 1 à 19, comprenant des roues arrières motrices couplées à au moins un moteur électrique (61) distinct du moteur électrique d'entrainement des lames de coupe.

## Patentansprüche

1. Elektrischer Mäher (10), der eine Schneideeinheit (20) umfasst mit:
- einer Schneideplatte (24), die mit wenigstens zwei Schneidemessern (46) versehen ist, die jeweils auf Messerwellen (42, 44) angebracht sind,
- wenigstens einen Elektromotor (60) zum Antreiben der Schneidemesser,
- einen Messer-Synchronisierungsmechanismus (70),
wobei:
- der Elektromotor (60) in einem Gehäuse (32) zwischen der Schneideplatte (24) und dem Messer-Synchronisierungsmechanismus (70) eingerichtet ist,
**dadurch gekennzeichnet, dass**:
- das Gehäuse (32) auf der Schneideplatte (24) befestigt ist und
- sich ein Teil des Gehäuses (32), der die Aufnahme für den Elektromotor (60) bildet, teilweise in die Schneideplatte (24) erstreckt,
- die Schneideplatte eine Schürze (26) zum Schutz der Schneidmesser umfasst und wobei der Teil des Gehäuses (32), der die Aufnahme für den Motor bildet, Achsschenkel (50, 52) aufweist, die die Schürze (26) durchqueren.

2. Elektrorasenmäher nach Anspruch 1, umfassend einen Rahmen (12), der ein Fahrgestell bildet, wobei sich der rohrförmige Rahmen entlang einer Ebene, die im Wesentlichen horizontal ist, in einer Betriebsstellung des Rasenmähers erstreckt, und wobei ein Abschnitt der Schneideinheit (20), der den Elektromotor und den Synchronisierungsmechanismus (70) umfasst dazu ausgelegt ist, sich durch den Rahmen zu erstrecken.

3. Elektrorasenmäher nach einem der Ansprüche 1 oder 2, wobei die Schneideinheit (20) beweglich an dem Rahmen (12) mit einer Verschiebungsmöglichkeit entlang einer senkrechten Achse zur Rahmenebene angebracht ist.

4. Elektrorasenmäher nach Anspruch 3, umfassend mindestens einen elektrischen Zylinder (38) für eine Verschiebung der Schneideinheit im Verhältnis zu dem Rahmen (12).

5. Elektrorasenmäher nach einem der vorhergehenden Ansprüche, wobei der Rahmen den Elektromotor (60), den Messersynchronisierungsmechaninsmus (70) und eine Einheit (82) zum Steuern des Rasenmähers enthält.

6. Elektrorasenmäher nach Anspruch 5, wobei die Steuereinheit (82) eine Leiterplatte (86) zur Regelung des Elektromotors (60) umfasst, wobei die Leiterplatte (86) über dem Synchronisierungsmechanismus (70) angeordnet ist und die Leiterplatte (86) mit einem Magnetsensor (80), wie etwa einem magnetoresistiven Sensor oder einem Hall-Sensor, versehen ist, der mit einem Magneten (90) zusammenwirkt, der in eine von der Schneidmesserwelle (42 44), einer Welle (42) des Elektromotors und einer Welle (42) des Synchronisierungsmechanismus integriert ist.

7. Elektrorasenmäher nach Anspruch 6, wobei der Rahmen (32) eine abnehmbare Abdeckung (80) umfasst, die Zugang zu der Steuereinheit (86) und dem Synchronisierungsmechanismus (70) bereitstellt.

8. Elektrorasenmäher nach einem der vorhergehenden Ansprüche, umfassend Lager (54) zum Anbringen der Schneidmesserwelleng, wobei die Lager in dem Gehäuse (32) angebracht sind.

9. Elektrorasenmäher nach einem der vorhergehenden Ansprüche, wobei das Gehäuse (32) ein Gehäuse aus einer Leichtmetalllegierung ist.

10. Elektrorasenmäher nach einem der vorhergehenden Ansprüche, wobei die Messerwellen (42,44) jeweils ein erstes Ende zum Anbringen Schneidmessers (60) und ein zweites Ende, das zu dem ersten Ende entgegengesetzt ist, aufweisen, wobei das zweite Ende mit dem Synchronisierungsmechanismus (70) derart verbunden ist dass ein konstanter Winke/abstand zwischen den Schneidmessem aufrechterhalten wird.

11. Elektrorasenmäher nach Anspruch 10, wobei der Synchronisierungsmechanismus (70) ein Mechanismus mit Zahnriemen (92) ist und wobei das zweite Ende der Messerwelle jeweils mit einer Zahnscheibe (72p, 74p) verbunden ist, die mit dem Zahnriemen zusammenwirkt.

12. Elektrorasenmäher Anspruch 10, der Synchronisierungsmechanismus (70) ein Zahnradgetriebemechanismus ist und wobei das zweite Ende der Messerwellen Jeweils mit einem Zahnrad (72, 74) verbunden Ist, das mit dem Zahnradgetriebe (72, 74, 76, 78) zusammenwirkt.

13. Elektrorasenmäher nach Anspruch 10, wobei der Synchronisierungsmechanismus (70) ein gemischter Mechanismus aus einem Zahnradgetriebe (76a, 76b) und einer Zahnscheibe (101, 102) ist.

14. Elektrorasenmäher nach einem der vorhergehenden Ansprüche, umfassend ein Schneidmesser (60), das auf einer Motormesserwelle (42) angebracht ist, die steif und drehfest einem Rotor (62) des Elektromotors (60) verbunden ist, und mindestens ein Messer (46), das jeweils auf mindestens einer Sekundämesserwelle (44) angebracht ist, die mit der Motormesserwelle (42) über den Synchronisierungsmechenismus gekoppelt ist, wobei der Synchronisierungsmechanismus ein Getriebe zwischen der Motorwelle und der Sekundätwelle bildet.

15. Elektrorasenmäher nach einem der vorhergehenden Ansprüche, umfassend eine Vielzahl von Elektromotoren (60), wobei jedem Schneidmesser jeweils ein Elektromotor zugeordnet ist.

16. Elektrorasenmäher nach Anspruch 15, umfassend eine Regelungseinheit (86) für die Elektromotoren, wobei die Regelungseinheit dazu ausgelegt ist, die den Schneidmessern zugeordneten Elektromotoren zu synchronisieren.

17. Elektrorasenmäher nach einem der vorhergehenden Ansprüche, wobei der Schneidteller zwei gegenläufige Messer (46) und eine Messerschutzhülle (26), die mit einem mittigen Auswurfkanal (28) versehen ist, umfasst.

18. Elektrorasenmäher nach Anspruch 17, umfassend einen Sammelbehälter (30) für Mähgut, der mit dem mittigen Auswurfkanal (28) verbunden ist.

19. Elektrorasenmäher nach Anspruch 18, wobei der Sammelbehälter en der Schneideinheit (20) befestigt ist.

20. Elektrorasenmäher nach einem der vorhergehenden Ansprüche, umfassend hintere Antriebsräder (16), die mit dem Elektromotor (60) zum Antreiben der Schneidmesser gekoppelt sind.

21. Elektrorasenmäher nach einem der Ansprüche 1 bis 19, umfassend hintere Antriebsräder, die mit mindestens einem anderen Elektromotor (61) als dem Elektromotor zum Antreiben der Schneidmesser gekoppelt sind.

## Claims

1. An electric mower (10) comprising a cutting unit (20) with:
- a cutting plate (24) provided with at least two cutting blades (46) respectively mounted on blade shafts (42, 44),
- at least one electric motor (60) for driving the cutting blades,
- a blade synchronisation mechanism (70),
wherein:
- the electric motor (60) is arranged in a casing (32) between the cutting plate (24) and the blade synchronisation mechanism (70),
**characterised in that**:
- the casing (32) is fastened on the cutting plate (24), and
- a portion of the casing (32), forming a housing for the electric motor (60), partly extends in the cutting plate (24),
- the cutting plate comprising a skirt (26) for protecting the cutting blades and wherein the portion of the casing (32) forming a housing for the motor has knuckle axles (50, 52) passing through said skirt (26).

2. An electric mower according to claim 1 comprising a frame (12) forming a chassis, the tubular frame extending along a substantially horizontal plane in an operating position of the mower, and wherein a part of the cutting unit (20) comprising the electric motor and the synchronisation mechanism (70) is of a configuration to extend through the frame.

3. An electric mower according to one of claims 1 and 2 wherein the cutting unit (20) is mounted moveably on the frame (12) with a possibility of displacement along an axis perpendicular to the plane of the frame.

4. An electric mower according to claim 3 comprising at least one electric actuator (36) for a displacement of the cutting unit with respect to the frame (12).

5. An electric mower according to any one of the preceding claims wherein the housing encloses the electric motor (60), the blade synchronisation mechanism (70) and a unit (82) for controlling the mower.

6. An electric mower according to claim 5 wherein the control unit (82) comprises an electronic card (86) for controlling the electric motor (60), the electronic card (86) being disposed above the synchronisation mechanism (70) and the electronic card (86) being provided with a magnetic sensor (80) such as a magnetoresistive or a Hall effect sensor cooperating with a magnet (90) fixed with respect to one of a cutting blade shaft (42, 44), a shaft (42) of the electric motor and a shaft (42) of the synchronisation mechanism.

7. An electric mower according to claim 6 wherein the housing (32) comprises a removable cover (80) giving access to the control unit (86) and the synchronisation mechanism (70).

8. An electric mower according to any one of the preceding claims comprising bearings (54) for mounting the shafts of the cutting blades, the bearings being mounted in the housing (32).

9. An electric mower according to any one of the preceding claims wherein the housing (32) is a housing of light alloy.

10. An electric mower according to any one of the preceding claims wherein the cutting blades (42, 44) respectively have a first end for mounting a cutting blade (60) and a second end opposite to the first end, the second end being connected to the synchronisation mechanism (70) so as to maintain a constant angular displacement between the cutting blades.

11. An electric mower according to claim 10 wherein the synchronisation mechanism (70) is a mechanism having a toothed belt (92) and wherein the second end of the blade shafts is respectively connected to a toothed pulley (72p, 74p) cooperating with the toothed belt.

12. An electric mower according to claim 10 wherein the synchronisation mechanism (70) is a gear mechanism and wherein the second end of the blade shafts is respectively connected to a toothed gear (72, 74) cooperating with the gear mechanism (72, 74, 76, 78).

13. An electric mower according to claim 10 wherein the synchronisation mechanism (70) is a mixed mechanism comprising a gear arrangement (76a, 76b) and a toothed belt (101, 102).

14. An electric mower according to any one of the preceding claims comprising a cutting blade (60) mounted on a motor blade shaft (42) 20 rigidly fixed in respect of rotation to a rotor (62) of the electric motor (6), and at least one blade (46) mounted respectively on at least one secondary blade shaft (44) coupled to the motor blade shaft (42) by way of the synchronisation mechanism (70), the synchronisation mechanism forming a transmission between the motor shaft and the secondary shaft.

15. An electric mower according to any one of the preceding claims comprising a plurality of electric motors (60), an electric motor being respectively associated with each cutting blade.

16. An electric mower according to claim 15 comprising a control unit (88) for the electric motors, the control unit being adapted to synchronise the electric motors associated with the cutting blades.

17. An electric mower according to any one of the preceding claims wherein the cutting plate comprises two counter-rotating blades (46) and a skirt (26) for protecting the blades, that is provided with a central ejection passage (28).

18. An electric mower according to claim 17 comprising a clippings collection box (30) connected to the central ejection passage (28).

19. An electric mower according to claim 18 wherein the collection box is fixed on the cutting unit (20).

20. An electric mower according to any one of the preceding claims comprising rear driving wheels (16) coupled to the electric motor (60) for driving the cutting blades.

21. An electric mower according to any one of claims 1 to 19 comprising rear driving wheels coupled to at least one electric motor (61) separate from the electric motor for driving the cutting blades.
